# EUROPÄISCHE PATENTANMELDUNG

(11) **EP 0 774 286 A2**
(43) Veröffentlichungstag der Anmeldung: **21.05.1997**
(21) Anmeldenummer: 96110441.1
(22) Anmeldetag: 28.06.1996
(51) Int. Cl.: B01D 29/09

(54) **Bandfilteranlage mit Abdichtvorrichtung**

(30) Priorität: 15.11.1995 DE 19542579
(71) Anmelder: HYDAC FILTERTECHNIK GmbH, D-66273 Sulzbach (DE)
(72) Erfinder: Teckentrup, Heinrich, 66123 Saarbrücken (DE)
(74) Vertreter: Patentanwälte Bartels und Partner

(57) **Zusammenfassung**

2. Die Erfindung betrifft eine Bandfilteranlage mit einer Schmutzkammer 10 und einer Reinkammer 12, zwischen denen ein Filterband 14 angeordnet ist. Eine Abdichtvorrichtung 16 mit einem aufblähbaren Dichtschlauch 20 übernimmt die Abdichtung des Kammerinneren gegenüber der Umgebung im Filtrierbetrieb. Dadurch, daß erfindungsgemäß mittels der Haltevorrichtung 18 mindestens ein Sperrhebeltrieb 38 betätigbar ist, dessen jeweiliger an der einen Kammer 10 schwenkbar angelenkter Sperrhebel 40 im Filterbetrieb an Gehäuseteilen 42 der jeweils anderen Kammer 12 derart angreift, daß ein Gegenlager zu dem jeweils aufblähbaren Dichtschlauch 20 gebildet ist, ist eine sichere Abdichtung gewährleistet.

## Beschreibung

Die Erfindung betrifft eine Bandfilteranlage mit einer Schmutzkammer und einer Reinkammer, die zum Freigeben oder Festlegen eines zwischen ihnen angeordneten Filterbandes relativ zueinander bewegbar angeordnet sind, wobei im Filterbetrieb bei festgelegtem Band das Innere der Kammern gegenüber der Umgebung mittels einer auf das Filterband einwirkenden Abdichtvorrichtung abgedichtet ist und mittels einer Haltevorrichtung die Kammern aneinandergehalten sind, und wobei die Abdichtvorrichtung mindestens einen aufblähbaren Dichtschlauch aufweist, der sich an Gehäuseteilen mindestens einer der beiden Kammern abstützt und der im aufgeblähten Zustand bei mittels der Haltevorrichtung festgelegten Kammern die Abdichtung vornimmt.

Dahingehende Bandfilteranlagen werden unter anderem dazu eingesetzt, verschmutztes Kühlschmiermittel von einer Werkzeugmaschine stammend zu reinigen. Eine Filterpumpe transportiert dabei das verschmutzte Kühlschmiermittel und fördert es in die Schmutz- oder Filterkammer, also dem Raum zwischen einer Oberkammer und dem als Endlosband ausgebildeten Filterband.

Die angesprochene Flüssigkeit durchströmt das Filterband und die Schmutzpartikel verbleiben als Filterkuchen auf demselben, wobei das gereinigte Kühlschmiermittel anschließend in den Sauberbehälter, also in die Reinkammer gelangt. Anschließend fördern Pumpen das derart gereinigte Kühlschmiermittel zur Werkzeugmaschine zurück. Mit zunehmendem Schmutzaufbau auf dem Filterband, der mit Filterkuchen bezeichnet ist, steigt der Differenzdruck in den Kammern, wobei vorzugsweise in der Schmutzkammer ein Überdruck eingestellt ist. Nach Erreichen des maximalen Differenzdruckes oder einer vorgebbaren Zeit wird die Regeneration des Filterbandes eingeleitet, wobei nach Trocknen des Filterkuchens durch Druckluft die Schmutzkammer gegenüber der fest angeordneten Reinkammer abgehoben wird, um so das Filterband freizugeben. Der Filterkuchen wird dann durch das umlaufende Filterband heraustransportiert und nach Zurückfahren der Schmutzkammer in ihre Betriebsstellung steht die Bandfilteranlage für einen erneuten Filterbetrieb zur Verfügung.

Bei sog. Klappbandfilteranlagen ist die Schmutzkammer als eine Art Klappe ausgebildet, die sich durch Pneumatikzylinder als Haltevorrichtung angetrieben auf- und zuklappen läßt. Im zugeklappten Zustand hält die Haltevorrichtung den Klappbandfilter auch bei Druckausfall dicht geschlossen, wobei eine fest an der Unterseite der Schmutzkammer entlang ihres Längsrandes verlaufende Gummileiste, die auf das Filterband einwirkt, die Abdichtung im Filterbetrieb übernimmt. Insbesondere bei sehr groß aufbauenden Bandfilteranlagen wirft der bekannte Klappmechanismus Probleme auf, da zum einen das Beherrschen des Auf- und Zuklappens von sehr großen und mithin baulich schweren Schmutzkammern Probleme bereitet und zum anderen die starre Dichtleiste in Verbindung mit ihrer starren Aufnahme der Schmutzkammer nicht geeignet ist, über größere Strecken hinweg eine saubere Abdichtung zu gewährleisten. Vielmehr kommt es zu Aufwerfungen im Bereich des Dichtsystems mit der Folge möglicher ungewollter Fluidaustritte aus den Kammern. Zu einem dahingehenden Versagen des Dichtsystems kommt es jedoch auch, wenn, wie in der US-PS 3,814,688 offenbart, die Schmutzkammer senkrecht von oben unter Beibehalten eines gleichmäßigen Abstandes bei der Absenkbewegung auf die Reinkammer aufgesetzt wird. Auch hierbei lassen sich ungewollte Fluidaustritte bereits aufgrund der starren Dichtleiste nicht vermeiden.

Bei einer anderen Art von Bandfilteranlagen nach der DE-OS 20 53 342 und der DE 38 41 426 C1 sind sowohl die Schmutzkammer als auch die Reinkammer stationär angeordnet und entlang ihren Längsrändern ist das Filterband dichtend geführt. Zum Bewegen des Filterbandes und mithin zum Austrag des Filterkuchens sind pneumatisch betätigbare Klappenverschlüsse vorgesehen, die an den senkrechten Stirnwänden der Schmutzkammer oberhalb der perforierten Auflage für das Filterband angebracht sind. Sie dichten im Filterbetrieb mithin zwei gegenüberliegende Schlitze, durch die das Band geführt wird, ab. Die Klappenverschlüsse werden von außen gegen die Dichtfläche eingeschwenkt, wobei sie gleichzeitig das Filterband spannen und es in die Schlitze einklemmen. Mit einer dahingehenden Bandfilteranlage läßt sich das Filterband im Filterbetrieb allseitig dichtend durch den Filterapparat führen und dahingehende Bandfilteranlagen können nahezu beliebig groß aufbauen; sie sind aber konstruktiv aufwendig und mithin teuer in der Herstellung. Auch ist aufgrund des starren Aufbaues der Kammern die Zugänglichkeit insbesondere zu Wartungszwecken in oder zwischen die beiden Kammern erschwert.

Durch die US-PS 4,343,701 und die DE-OS 14 61 387 sind zwar bei Bandfilteranlagen Abdichtvorrichtungen mit aufblähbaren Dichtschläuchen bekannt geworden. Diese können jedoch nur bei starr zueinander angeordneten Rein- und Schmutzkammern verwendet werden, da ansonsten mit dem Aufblähen des jeweiligen Dichtschlauches eine Abhebekraft entsteht, die bei einer Bandfilteranlage mit bewegbaren Kammern diese auseinandertreibt, was zu einem Verlust der Dichtwirkung führt. Eine Haltevorrichtung mit Pneumatikzylindern, die dieser Abhebekraft entgegenwirken soll, müßte im Hinblick auf die hohen Haltekräfte entsprechend groß dimensioniert werden, was sowohl die Herstellals auch die Betriebskosten einer dahingehenden Bandfilteranlage erhöhen würde.

Ausgehend von diesem Stand der Technik liegt der Erfindung die Aufgabe zugrunde, eine Bandfilteranlage dahingehend weiter zu verbessern, daß sie in Abhängigkeit des jeweiligen Verwendungszweckes beliebig groß aufbauen kann und dennoch eine sichere Abdichtung gewährleistet, daß sie kostengünstig in der Herstellung und im Betrieb ist und einen guten Zugang der Kammern bei anstehenden Wartungsarbeiten erlaubt. Eine dahingehende Aufgabe löst eine Bandfilteranlage mit den Merkmalen des Anspruches 1.

Gemäß dem kennzeichnenden Teil des Anspruches 1 ist mittels der Haltevorrichtung mindestens ein Sperrhebeltrieb betätigbar, dessen jeweiliger an der einen Kammer schwenkbar angelenkter Sperrhebel im Filterbetrieb an Gehäuseteilen der jeweils anderen Kammer derart angreift, daß ein Gegenlager zu dem jeweils aufblähbaren Dichtschlauch gebildet ist. Mit dem jeweiligen aufblähbaren Dichtschlauch lassen sich auch über größere Dichtstrecken hinweg eine saubere Dichtanlage erreichen und gegebenenfalls Unebenheiten ausgleichen, so daß eine vollständige Abdichtung des Inneren der beiden Kammern gegenüber der Umgebung mit Sicherheit erreicht ist. Dies wird noch dadurch unterstützt, daß die Haltevorrichtung im aufgeblähten Zustand des jeweiligen Dichtschlauches die Festlegung der Kammern übernimmt, indem diese gegenseitig verriegelt werden, wobei die Verriegelung der Abhebekraft des jeweils aufgeblähten Dichtschlauches entgegenwirkt. Durch die derart gebildete Gegenlagerung braucht die Haltevorrichtung nicht übermäßig dimensioniert zu werden, da sie nur die Kräfte für das Anheben und Absenken mindestens einer der beiden Kammern aufzubringen braucht, jedoch keine Dichtkräfte über den Dichtschlauch zu übertragen hat.

Hierdurch sind die Herstellkosten als auch die Betriebskosten gesenkt und durch die relative Bewegungsmöglichkeiten der beiden Kammern zueinander, wobei vorzugsweise die Schmutzkammer von der feststehenden Reinkammer abgehoben wird, ist eine gute Zugänglichkeit der Bandfilteranlage bei Wartungsarbeiten ermöglicht. Da der jeweilige Dichtschlauch auftretende Unebenheiten, ohne die Dichtwirkung zu beeinträchtigen, besser kompensieren kann, müssen die vorgesehenen Anlageflächen für die Abdichtung nicht hochgenau bearbeitet werden, was wiederum die Herstellkosten senkt.Durch die relative Bewegungsmöglichkeit der beiden Kammern zueinander, wobei vorzugsweise die Schmutzkammer von der feststehenden Reinkammer abgehoben wird, ist eine gute Zugänglichkeit zu der Bandfilteranlage bei Wartungsarbeiten ermöglicht.

Bei einer bevorzugten Ausführungsform der erfindungsgemäßen Bandfilteranlage übt der jeweilige Dichtschlauch über seine gesamte Länge entlang des Außenrandes mindestens einer Kammer angeordnet in Richtung auf die jeweils andere Kammer stirnseitig eine Dichtkraft auf das Filterband im Filtrierbetrieb aus. Vorzugsweise ist dabei der jeweilige Dichtschlauch auf der Unterseite der Schmutzkammer angeordnet und das Filterband ist an seinen Längsrändern abgestützt über eine mit Durchlässen versehene Abstützfläche der Reinkammer geführt. Damit läßt sich das Filterband unter planer Anlage auf der Abstützfläche mittels des jeweiligen Dichtschlauches festklemmen, was die Dichtwirkung verbessert und ein Aufwerfen des Filterbandes im Filtrierbetrieb vermeiden hilft.

Bei einer besonders bevorzugten Ausführungsform der erfindungsgemäßen Bandfilteranlage sind die Reinkammer und die Schmutzkammer mit ihren einander zugewandten Außenrändern unter Beibehalten eines gleichmäßigen Abstandes aufeinander zu- oder voneinander wegbewegbar, insbesondere in einer vertikalen Richtung, wobei die Reinkammer vorzugsweise feststehend angeordnet ist. Ohne eine komplizierte Schwenkbewegung ansteuern oder ausführen zu müssen, läßt sich also derart die Schmutzkammer von der Reinkammer abheben und senken.

Bei einer bevorzugten Ausführungsform der erfindungsgemäßen Bandfilteranlage kommt mit zunehmender Befüllung des jeweiligen Federtriebes der zugeordnete Sperrhebel außer Eingriff und die Schmutzkammer hebt sich von der Reinkammer ab. Hierdurch ergibt sich eine Synchronisierung der Einzelfunktionen, Bewegen der jeweiligen Kammer und Verriegeln oder Freigeben der Kammern für einen Filtrierbetrieb bzw. für einen Reinigungsvorgang des Filterbandes. Vorzugsweise ist dabei der jeweilige Dichtschlauch und das jeweilige Federelement mit Druckluft beaufschlagbar, was einen sauberen schmutzfreien Betrieb von Abdicht- und Haltevorrichtung gewährleistet; es ist aber auch denkbar, hier andere Blähmedien, beispielsweise Fluide, einzusetzen.

Vorzugsweise ist ferner vorgesehen, daß die Haltevorrichtung parallel zu den Längsrändern des Filterbandes an der jeweiligen Kammer angeordnet ist, um den freien Ein- und Auslauf des Filterbandes an den Endseiten der Bandfilteranlage nicht zu beeinträchtigen.

Bei einer bevorzugten Ausführungsform der erfindungsgemäßen Bandfilteranlage ist die Schmutzkammer über mindestens einen Kompensator an einen starren Einlaß gekoppelt und in ihrem Inneren weist sie eine Verteilerplatte auf. Mit dem jeweiligen elastisch wirkenden Kompensator läßt sich beim Anheben und Absenken der Schmutzkammer ein Längenausgleich für die Einlaßführung erreichen. Die angesprochene Verteilerplatte vermeidet, daß über den Einlaß eintretendes Fluid unmittelbar auf das Filterband auftrifft, was zu einer Beschädigung desselben führen könnte.

Bei einer weiteren bevorzugten Ausführungsform der Bandfilteranlage ist über die Schmutzkammer das verunreinigte Fluid auf das Filterband bringbar, dessen filtrierende Durchlässe das Fluid von den Verunreinigungen trennt, die mittels des Filterbandes in Abhängigkeit von der Höhe der auf dem Filterband anfallenden Verunreinigungen durch entsprechendes Anheben der Schmutzkammer austragbar sind. Der dahingehende Austrag der Verunreinigungen kann zeitabhängig erfolgen, also in kontinuierlichen Abständen; er kann aber auch differenzdruckgesteuert vorgenommen werden, wobei die Schmutzkammer sich weit von der Reinkammer entfernen läßt, so daß auch in der Höhe groß aufbauende Filterkuchen aus der Bandfilteranlage sicher und störungsfrei abtransportierbar sind.

Bei einer bevorzugten Ausführungsform der erfindungsgemäßen Bandfilteranlage weist das Filterband zwei gegenüberliegende filtrierende Durchlaßbereiche auf, von denen einer der Filtration dient und der andere gleichzeitig hierbei von den verbleibenden Verunreinigungen reinigbar ist. Hierdurch ergibt sich ein diskontinuierlicher Zweiphasenbetrieb, wobei die Umschaltzeiten bei direkter Bandführung über zwei Endlostrommeln sehr kurz bemessen sein können. Vorzugsweise ist dabei das Filterband mehrlagig und einstückig ausgebildet, wobei die filtrierenden Durchlässe von zwei Deckbändern freigelassen sind und wobei das Filterband eine vorgebbare Eigenelastizität aufweist. Aufgrund dieser Ausgestaltung muß kein eigenständiger Längenausgleich innerhalb des Filterbandes vorgesehen sein.

Im folgenden ist die erfindungsgemäße Bandfilteranlage anhand der Zeichnung näher erläutert.

Es zeigen:
- Fig.1: eine Seitenansicht auf die gesamte Bandfilteranlage;
- Fig.2: einen Schnitt längs der Linie I - I in Fig.1;
- Fig.3 und 4: der Fig.2 entsprechende Schnitte mit verschiedenen Betriebsstellungen, wobei der einfacheren Darstellung wegen in Blickrichtung auf die Figuren gesehen die rechte Bildseite weggelassen ist;
- Fig.5: eine Draufsicht auf das innerhalb der Bandfilteranlage zum Einsatz kommende Filterband.

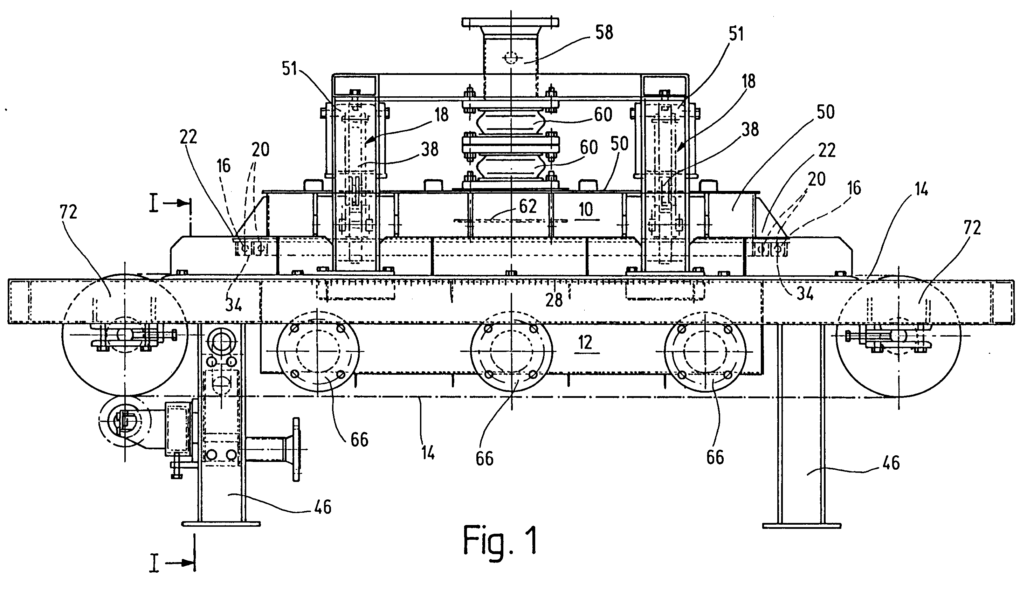

Die in der Fig.1 im wesentlichen als Ganzes dargestellte Bandfilteranlage weist eine Schmutzkammer 10 und eine Reinkammer 12 auf. Die angesprochenen Kammern 10,12 sind hohlschalenartig ausgebildet und können aus üblichen Gußteilen gebildet sein. Zum Freigeben oder Festlegen eines zwischen ihnen angeordneten Filterbandes 14 in Form eines Endlosbandes ist die Schmutzkammer 10 von der feststehenden Reinkammer 12 auf- bzw. abbewegbar angeordnet. Im Filterbetrieb bei festgelegtem Band 14 ist das Innere der Kammern 10,12 gegenüber der Umgebung mittels einer auf das Filterband 14 einwirkenden, als Ganzes mit 16 bezeichneten Abdichtvorrichtung abgedichtet. Ferner ist eine als Ganzes mit 18 bezeichnete Haltevorrichtung vorhanden, die die Kammern 10,12 im Filterbetrieb aneinanderhält.

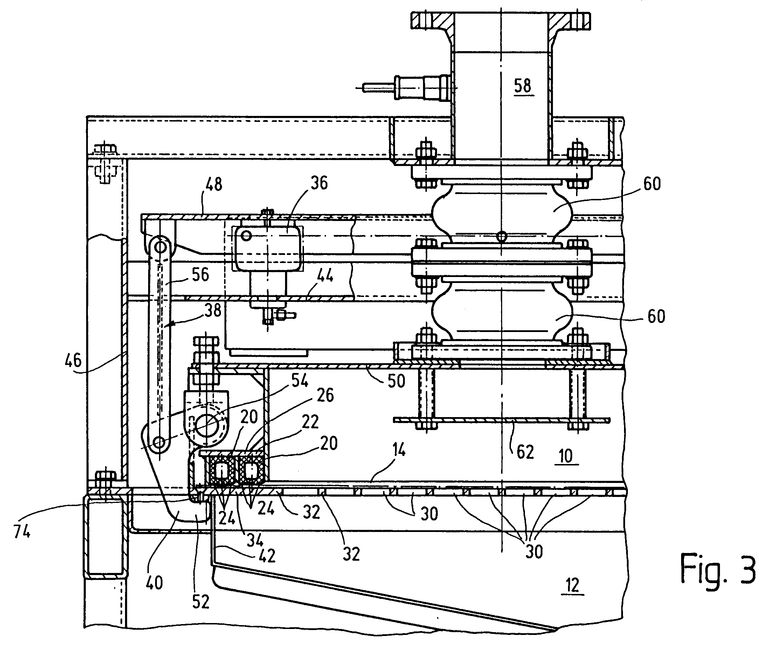

Die Abdichtvorrichtung 16 weist zwei aufblähbare Dichtschläuche 20 auf, die sich jeweils an horizontal verlaufenden Gehäuseteilen 22 der oberen Schmutzkammer 10 abstützen. Im mit Druckluft aufgeblähten Zustand, wie dies in der Fig.3 dargestellt ist, übernehmen die beiden Dichtschläuche 20 bei mittels der Haltevorrichtung 18 festgelegten Kammern 10,12 die Abdichtung. Die beiden Dichtschläuche 20 sind in einer Ebene nebeneinanderliegend längs des gesamten Außenumfanges der Schmutzkammer 10 an deren Unterseite angeordnet und bilden mithin jeweils einen geschlossenen Ring aus, wobei im Umleitungsbereich zwischen Längs- und Stirnseiten der Bandfilteranlage der jeweilige Dichtschlauch 20 einer vorgebbaren Kurvenform (nicht dargestellt) nachfolgt, um eine gleichmäßige Verteilung des Blähmediums innerhalb des jeweiligen Dichtschlauches 20 zu gewährleisten.

Der jeweilige Dichtschlauch 20 stellt mithin eine Art pneumatische Dichtung dar, wie sie unter anderem von der Firma Busak + Shamban unter ihrer eingetragenen Marke CEFIL'AIR auf dem Markt frei erhältlich ist. Zur Verbesserung der Dichtwirkung weist der jeweilige Dichtschlauch 20 im Bereich der wirksamen Abdichtfläche parallel zueinander angeordnete Längsrippen 24 (Fig.3) auf. Ferner ist der jeweilige Dichtschlauch 20 an eine Druckluftquelle (nicht dargestellt) über übliche und daher nicht näher beschriebene Anschlußstücke (nicht dargestellt) druckluftführend angeschlossen. Der jeweilige Dichtschlauch 20 übt mithin über seine gesamte Länge entlang des Außenrandes 26 der Schmutzkammer 10 in Richtung auf die Reinkammer 12 stirnseitig eine Dichtkraft auf das Filterband 14 im Filtrierbetrieb aus. Ferner ist der jeweilige Dichtschlauch 20 auf der Unterseite der Schmutzkammer 10 angeordnet und wirkt auf das Filterband 14 an seinen Längsrändern 28 (Fig.3) ein, das über eine mit Durchlässen 30 oder einer Perforation versehene Abstützfläche 32 der Reinkammer 12 geführt ist.

Auch die Reinkammer 12 ist mit einem jeweils planen Außenrand 34 versehen, der entlang den Längsrändern der Bandfilteranlage verläuft und der randseitig die Funktion der Abstützfläche 32 für die Auflage des Filterbandes 14 übernimmt. Unter Beibehalten eines gleichmäßigen Abstandes über den gesamten Bereich der Außenränder 26,34 läßt sich bei feststehender Reinkammer 12 die Schmutzkammer 10 in einer vertikalen Richtung auf- und absenken, so daß über den gesamten Bereich des Außenrandes 26 der Schmutzkammer 10 zum Außenrand 34 der Reinkammer 12 der sich kontinuierlich ändernde Abstand konstant bleibt.

Zum Bewegen der Schmutzkammer 10 dient die Haltevorrichtung 18, die hierfür über aufblähbare Federelemente 36 verfügt, wobei jedem Federelement 36 ein als Ganzes mit 38 bezeichneter Sperrhebeltrieb zugeordnet ist, dessen jeweiliger Sperrhebel 40 im Filtrierbetrieb an den Gehäuseteilen 42 der Reinkammer 12 angreift. Die aufblähbaren Federelemente 36 sind aus sog. Luftfedern gebildet, die eine Art aufblähbaren Gummibalg bilden, wobei als Blähmedium wieder vorzugsweise Druckluft eingesetzt wird. Dahingehende Luftfederelemente sind ebenfalls auf dem Markt frei erhältlich, wobei bei Druckluftzufuhr die Luftfeder sich in einem vorgebbaren Längenbereich auszudehnen beginnt.

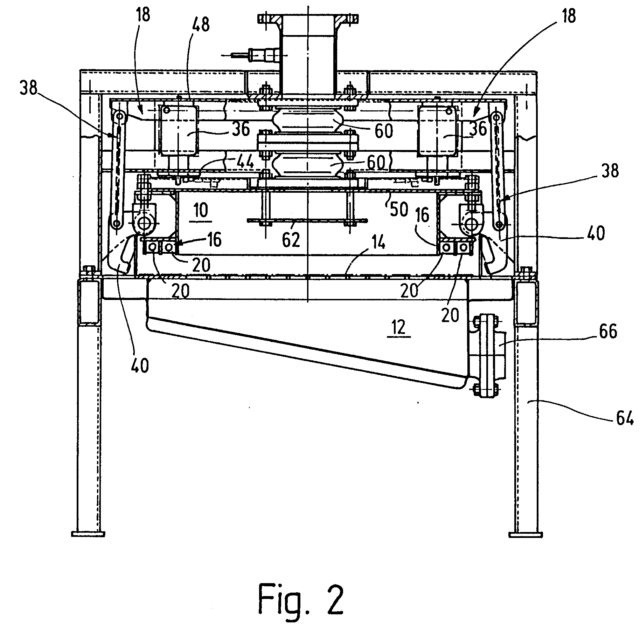

In Abhängigkeit von der Baugröße der jeweiligen Bandfilteranlage können entlang ihrer beiden Längsränder mehrere Federelemente 36 hintereinander angeordnet sein, wobei bei der gezeigten Bandfilteranlage jeweils endseitig an jedem Längsrand zwei Federelemente 36 zum Einsatz kommen. Das jeweilige Federelement 36 stützt sich mit einem Ende an einer Abstützplatte 44 ab, die Teil des feststehenden Maschinenrahmens 46 ist, wohingegen das andere Ende sich an einer Antriebsplatte 48 abstützt, an der das Gehäuse 50 der Schmutzkammer 10 angelenkt ist. Wie insbesondere die Fig. 1 und 2 zeigen, übergreift die jeweilige Haltevorrichtung 18 mit der ihr zugeordneten Abstützplatte 44 sowie mit der Antriebsplatte 48 portalartig mit jeweils einem Paar an Standsäulen 51 unter Abstand das Gehäuse 50 der Schmutzkammer 10.

Der jeweilige Sperrhebel 40 weist ein abgekröpftes Klinkenende 52 auf und ist mittels des Federelementes 36 um einen Drehpunkt 54 oder Drehachse schwenkbar angeordnet. Dabei ist jedem Federelement 36 ein von ihm betätigbarer schwenkbarer Sperrhebel 40 zugeordnet. Hierfür greift ein gelenkig gehaltener Verbindungsstab 56 über jeweils eine endseitig angeordnete Gelenkstelle sowohl an der Antriebsplatte 48 als auch am Sperrhebel 40 an. Die Gelenkstelle oder der Drehpunkt 54 ist wiederum höheneinstellbar mit dem Gehäuse 50 der Schmutzkammer 10 verbunden. Mit zunehmender Befüllung des jeweiligen Federtriebes 36, was für alle Federtriebe 36 synchron vonstatten geht, kommt der jeweils zugeordnete Sperrhebel 40 außer Eingriff und die Schmutzkammer 10 kann sich von der Reinkammer 12 abheben. Der dahingehende abgehobene Zustand ist in der Fig.2 im Längsschnitt dargestellt.

Zur Befüllung der Schmutzkammer 10 ist ein starrer Einlaß 58 vorgesehen, der über zwei Kompensatoren 60 in Form von Gummibälgen in das Innere der Schmutzkammer 10 fluidführend mündet. Die Kompensatoren 60 bewerkstelligen einen Längenausgleich über den gesamten Verfahrbereich der Schmutzkammer 10 und sind über entsprechende Flanschstücke sowohl untereinander als auch mit dem Maschinenrahmen 46 sowie mit dem Gehäuse 50 der Schmutzkammer 10 verbunden. Unterhalb des Einlasses in die Schmutzkammer 10 ist eine Verteilerplatte 62 angeordnet, die das über den Einlaß 58 zugeführte verschmutzte Fluid innerhalb der Schmutzkammer 10 verteilt.

Das in die Schmutzkammer 10 über den Einlaß 58 eingebrachte verunreinigte Fluid, beispielsweise mit Spänen versehene Kühlschmierflüssigkeit, kommt auf die Oberseite des Filterbandes 14, dessen filtrierende Durchlässe 64 das Fluid von den Verunreinigungen trennt, die auf dem Filterband 14 liegen bleiben, wohingegen das Fluid unter Durchtritt der Durchlässe 64 gereinigt in die Reinkammer 12 gelangt und von dort über Auslässe 66 abgeführt und beispielsweise zur Werkzeugmaschine zurückgefördert wird.

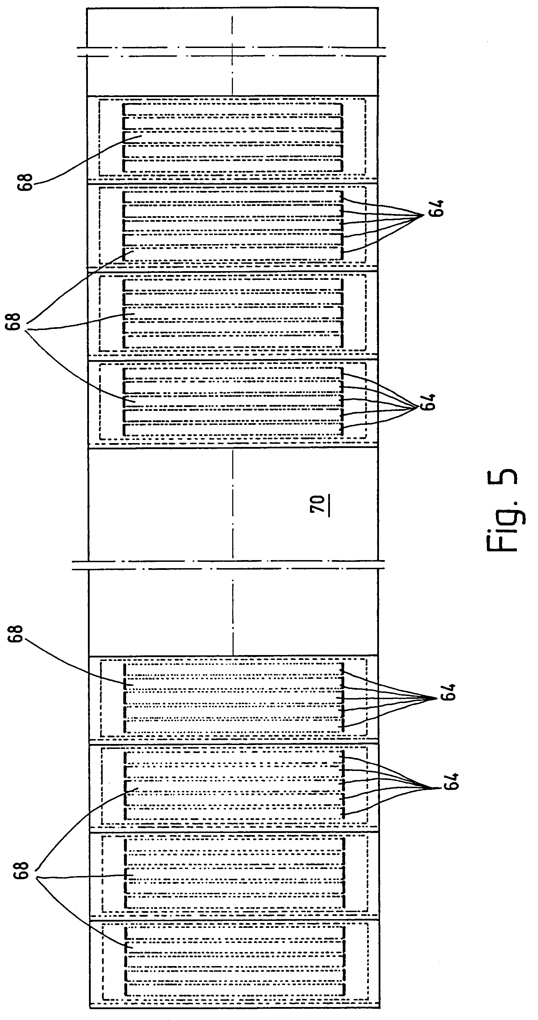

Das Filterband 14 weist, wie dies insbesondere die Fig.5 zeigt, zwei gegenüberliegende filtrierende Durchlaßbereiche 68 auf, die die filtrierenden Durchlässe 64 bilden, wobei im Filtrierbetrieb der jeweils eine Durchlaßbereich 68 der Filtration dient und der andere gleichzeitig gegenüberliegend angeordnet von den verbleibenden Verunreinigungen reinigbar ist. Mögliche Reinigungsarten sind hierbei das Abbürsten und/oder Abblasen des Filterbandes 14 sowie eine Gurtreinigung mit Reinigungsflüssigkeiten. Die dahingehende Reinigung kann im geschlossenen System erfolgen. Das als Endlosband ausgebildete Filterband 14 ist mehrlagig und einstückig ausgebildet, wobei die filtrierenden Durchlässe 64 von zwei Deckbändern 70 freigelassen sind, die dem Filterband 14 eine vorgegebene Eigenelastizität geben, die für einen reibungslosen Betrieb notwendig ist. Als Antrieb dienen zwei Endlosrollen 72, von denen nur eine angetrieben zu werden braucht. Eine Druckerhöhungsanlage (nicht dargestellt) sorgt dafür, daß in der Schmutzkammer 10 ein gegenüber der Umgebung einstellbarer Überdruck herrscht.

Zum besseren Verständnis der erfindungsgemäßen Bandfilteranlage wird diese im folgenden anhand eines Funktionsbeispieles näher erläutert.
Im Filtrierbetrieb der Anlage ist die haubenförmige Schmutzkammer 10 geschlossen, d.h. sie nimmt ihre in der Fig.3 dargestellte Position ein und die beiden Dichtschläuche 20 sind, wie dargestellt, aufgebläht. In diesem Betriebszustand sind die Federelemente 36 drucklos und der Sperrhebel 40 mit seinem Klinkenende 52 untergreift den Außenrand 34 der Abstützfläche 32 der Reinkammer 12. Die aufgeblähten Dichtschläuche 20, die über Einzelstege voneinander räumlich getrennt sein können, drücken den Außenrand 26 und mithin das Gehäuse 50 sowie den daran festgelegten Sperrhebel 40 nach oben, so daß die beiden Kammern 10,12 gegeneinander fest verriegelt sind. Die auf die Oberseite des Filterbandes 14 drückenden Dichtschläuche 20 garantieren dabei gegenüber der Umgebung eine vollständige Abdichtung sowohl entlang den Längsseiten als auch den Stirnseiten der Bandfilteranlage. In der Schmutzkammer 10 ist ein Unterdruck eingestellt und über den Einlaß 58 zugeführte Schmutzflüssigkeit wird von der Verteilerplatte 62 verteilt, wobei die filtrierenden Durchlässe 64 eine Trennung der Verunreinigungen von dem Fluid vornehmen, das über die Durchlässe 30 in die eigentliche Reinkammer 12 gelangt.

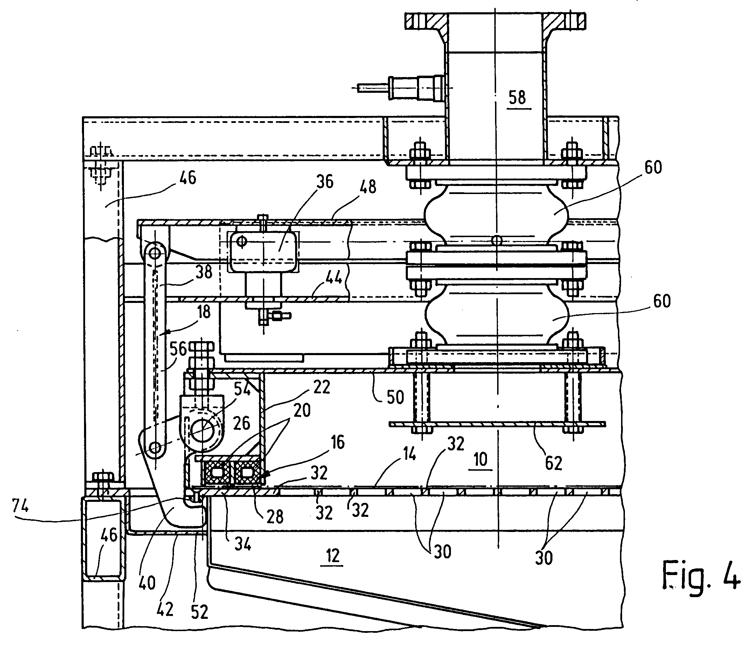

Ist die Anlage eine vorgebbare Zeit in Betrieb gewesen oder kommt es mit Zusetzen der filtrierenden Durchlässe 64 zu einem Differenzdruckanstieg innerhalb der Anlage, wird der Filtrierbetrieb stillgesetzt, indem über den Einlaß 58 keine weitere Schmutzflüssigkeit mehr in die Filteranlage gebracht wird. Zu diesem Zeitpunkt hat sich dann auf dem Filterband 14 ein entsprechender Filterkuchen bereits abgesetzt. Zum Anheben der Schmutzkammer 10 werden zunächst die beiden ringförmigen Dichtschläuche 20 drucklos gemacht, die dann ihre in der Fig.4 gezeigte Stellung einnehmen. Die die Dichtschläuche 20 begrenzenden und führenden Stege, die senkrecht auf dem Außenrand 26 des Gehäuses 50 sich abstützen, liegen längs ihren freien Rändern dann auf der Oberseite des Filterbandes 14 auf mit der Folge, daß der Sperrhebel 40 um diese vom Gehäuse 50 zurückgelegte Wegstrecke ebenfalls nach unten bewegt wird (s.Fig.4) und den Außenrand 34 der Reinkammer 12 freigibt.

Durch Ansteuern und mithin Befüllen des jeweiligen Federelementes 36 mit Druckluft erfährt dieses eine Längenänderung und die Antriebsplatte 48 erfährt eine Bewegung nach oben, wobei sie über den Verbindungsstab 56 den zugeordneten Sperrhebel 40 über die Drehachse 54 nach außen wegschwenkt, wobei gleichzeitig das Gehäuse 50 der Schmutzkammer 10 angehoben wird, bis sich die in der Fig.2 dargestellte Situation ergibt. Das Filterband 14 ist gemäß der Darstellung in Fig.2 nunmehr vollständig freigegeben und die Schmutzkammer 10 derart um einen Höhenbetrag angehoben, daß der Filterkuchen zusammen mit dem Endlosband den Filtrierbereich verlassen kann. Beim Herumführen des Endlosbandes 14 um eine der Endlostrommeln 72 fällt der Filterkuchen vom Band 14 herunter und verbleibende Verschmutzungen können über die bereits angesprochene Reinigungsanlage entfernt werden. Der bisher gereinigte Filtrierbereich gelangt dann von der Unterseite in den Filtrierbereich unterhalb der freien Öffnung der Schmutzkammer 10, die in umgekehrter Reihenfolge, wie eben beschrieben, herabgelassen den erneuten Filtrierbetrieb aufnimmt. Um eine bessere Verrastungsmöglichkeit des jeweiligen Sperrhebels 40 zu gewährleisten, kann an der Unterseite des Außenrandes 34 eine Angriffsleiste 74 angeschraubt sein, die mit nach beiden Seiten hin abfallenden Längsflanken versehen ist, die Anlageflächen für das Klinkenende 52 des Sperrhebels 40 bilden.

## Patentansprüche

1. Bandfilteranlage mit einer Schmutzkammer (10) und einer Reinkammer (12), die zum Freigeben oder Festlegen eines zwischen ihnen angeordneten Filterbandes (14) relativ zueinander bewegbar angeordnet sind, wobei im Filterbetrieb bei festgelegtem Band (14) das Innere der Kammern (10,12) gegenüber der Umgebung mittels einer auf das Filterband (14) einwirkenden Abdichtvorrichtung (16) abgedichtet ist und mittels einer Haltevorrichtung (18) die Kammern (10,12) aneinandergehalten sind, und wobei die Abdichtvorrichtung (16) mindestens einen aufblähbaren Dichtschlauch (20) aufweist, der sich an Gehäuseteilen (22) mindestens einer der beiden Kammern (10) abstützt und der im aufgeblähten Zustand bei mittels der Haltevorrichtung (18) festgelegten Kammern (10,12) die Abdichtung vornimmt, **dadurch gekennzeichnet**, daß mittels der Haltevorrichtung (18) mindestens ein Sperrhebeltrieb (38) betätigbar ist, dessen jeweiliger an der einen Kammer (10) schwenkbar angelenkter Sperrhebel (40) im Filterbetrieb an Gehäuseteilen (42) der jeweils anderen Kammer (12) derart angreift, daß ein Gegenlager zu dem jeweils aufblähbaren Dichtschlauch (20) gebildet ist.

2. Bandfilteranlage nach Anspruch 1, dadurch gekennzeichnet, daß der jeweilige Dichtschlauch (20) über seine gesamte Länge entlang des Außenrandes (26) mindestens einer Kammer (10) angeordnet in Richtung auf die jeweils andere Kammer (12) stirnseitig eine Dichtkraft auf das Filterband (14) im Filtrierbetrieb ausübt.

3. Bandfilteranlage nach Anspruch 1 oder 2, dadurch gekennzeichnet, daß der jeweilige Dichtschlauch (20) auf der Unterseite der Schmutzkammer (10) angeordnet ist und daß das Filterband (14) an seinen Längsrändern (28) abgestützt über eine mit Durchlässen (30) versehene Abstützfläche (32) der Reinkammer (12) geführt ist.

4. Bandfilteranlage nach einem der Ansprüche 1 bis 3, dadurch gekennzeichnet, daß die Reinkammer (12) und die Schmutzkammer (10) mit ihren einander zugewandten Außenrändern (34,26) unter Beibehalten eines gleichmäßigen Abstandes aufeinander zu- oder voneinander wegbewegbar sind, insbesondere in einer vertikalen Richtung, und daß die Reinkammer (12) vorzugsweise feststehend angeordnet ist.

5. Bandfilteranlage nach einem der Ansprüche 1 bis 4, dadurch gekennzeichnet, daß der jeweilige Sperrhebel (40) ein abgekröpftes Klinkenende (52) aufweist und mittels des Federelementes (36) um einen Drehpunkt (54) schwenkbar an der Schmutzkammer (10) angeordnet ist.

6. Bandfilteranlage nach Anspruch 4 oder 5, dadurch gekennzeichnet, daß mit zunehmender Befüllung des jeweiligen Federtriebes (36) der zugeordnete Sperrhebel (40) außer Eingriff kommt und die Schmutzkammer (10) sich von der Reinkammer (12) abhebt.

7. Bandfilteranlage nach einem der Ansprüche 4 bis 6, dadurch gekennzeichnet, daß der jeweilige Dichtschlauch (20) und das jeweilige Federelement (36) mit Druckluft beaufschlagbar ist.

8. Bandfilteranlage nach einem der Ansprüche 1 bis 7, dadurch gekennzeichnet, daß die Haltevorrichtungen (18) parallel zu den Längsrändern des Filterbandes (14) an der jeweiligen Kammer (10,12) angeordnet sind.

9. Bandfilteranlage nach einem der Ansprüche 1 bis 8, dadurch gekennzeichnet, daß die Schmutzkammer (10) über mindestens einen Kompensator (60) an einen starren Einlaß (58) gekoppelt ist und in ihrem Inneren eine Verteilerplatte (62) aufweist.

10. Bandfilteranlage nach einem der Ansprüche 1 bis 9, dadurch gekennzeichnet, daß über die Schmutzkammer (10) das verunreinigte Fluid auf das Filterband (14) bringbar ist, dessen filtrierende Durchlässe (64) das Fluid von den Verunreinigungen trennt, die mittels des Filterbandes (14) bei in Abhängigkeit von der Höhe der auf dem Filterband (14) anfallenden Verunreinigungen durch entsprechendes Anheben der Schmutzkammer (10) austragbar sind.

11. Bandfilteranlage nach Anspruch 10, dadurch gekennzeichnet, daß das Filterband (14) zwei gegenüberliegende filtrierende Durchlaßbereiche (68) aufweist, von denen einer der Filtration dient und der andere gleichzeitig hierbei von den verbleibenden Verunreinigungen reinigbar ist.

12. Bandfilteranlage nach einem der Ansprüche 1 bis 11, dadurch gekennzeichnet, daß das Filterband (14) mehrlagig und einstückig ist, daß die filtrierenden Durchlässe (64) von zwei Deckbändern (70) freigelassen sind und daß das Filterband (14) eine vorgebbare Eigenelastizität aufweist.

13. Bandfilteranlage nach einem der Ansprüche 1 bis 12, dadurch gekennzeichnet, daß in der Schmutzkammer (10) ein Überdruck herrscht oder daß in der Reinkammer (12) ein Unterdruck eingestellt ist oder daß beide angesprochenen Druckverhältnisse innerhalb der Anlage eingestellt sind.
